(19) Europäisches Patentamt
European Patent Office
Office européen des brevets

(11) **EP 4 572 167 A1**

(12) **EUROPEAN PATENT APPLICATION**
published in accordance with Art. 153(4) EPC

(43) Date of publication:
**18.06.2025 Bulletin 2025/25**

(21) Application number: 23852774.1

(22) Date of filing: **18.07.2023**

(51) International Patent Classification (IPC):
**H04B 7/0456** (2017.01)     **H04B 7/0404** (2017.01)
**H04B 7/06** (2006.01)

(52) Cooperative Patent Classification (CPC):
**H04B 7/0404; H04B 7/0456; H04B 7/06**

(86) International application number:
**PCT/KR2023/010256**

(87) International publication number:
**WO 2024/034893 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **11.08.2022  KR 20220100773**

(71) Applicant: **LG Electronics Inc.
Yeongdeungpo-gu
Seoul 07336 (KR)**

(72) Inventor: **PARK, Haewook
Seoul 06772 (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(54) **METHOD AND DEVICE FOR TRANSMITTING AND RECEIVING SIGNAL IN WIRELESS COMMUNICATION SYSTEM**

(57)     A method by which a terminal transmits a signal according to at least one of the embodiments disclosed in the present specification comprises: reporting, to a network, information about antenna groups configured on the basis of a plurality of antennas in the terminal; receiving, from the network, information about a co-phase between the antenna groups; receiving downlink control information (DCI) for uplink scheduling; and transmitting an uplink signal on the basis of the DCI, wherein a codebook for precoding the uplink signal may be determined on the basis of information, received from the network, about the co-phase between the antenna groups.

**FIG. 12**

EP 4 572 167 A1

**Description**

[Technical Field]

The present disclosure relates to a wireless communication system, and more particularly, to a method and apparatus for transmitting or receiving a downlink/uplink radio signal in a wireless communication system.

[Background Art]

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

[Disclosure]

[Technical Problem]

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

[Technical Solution]

In one aspect, provided herein is a method of transmitting a signal by a user equipment (UE) in a wireless communication system. The method may include reporting, to a network, information about antenna groups which are configured based on a plurality of antennas of the UE, receiving information about a co-phase between the antenna groups from the network, receiving downlink control information (DCI) for uplink scheduling, and transmitting an uplink signal based on the DCI. A codebook for precoding of the uplink signal may be determined based on the information about the co-phase between the antenna groups received from the network.

The number of the antennas may be 8 or more.

The information about the co-phase may be determined based on the information about the antenna groups reported by the UE.

The information about the co-phase may provide a co-phase for each subband.

A precoding matrix for the uplink signal may be determined based on the codebook determined based on the information about the co-phase and a transmission precoding matrix indicator (TPMI) field included in the DCI.

The information about the antenna groups may relate to at least one of the number of the antenna groups, a distance between the antenna groups, the number of antennas in each of the antenna groups, or a distance between antennas included in each of the antenna groups.

The UE may report, to the network, at least one of the number of antenna ports or the number of antenna port groups available for coherent transmission based on the information about the co-phase between the antenna groups.

The transmission of the uplink signal may be related to multiple transmission reception points (TRPs).

In another aspect, a processor-readable recording medium storing a program for executing the signal transmission method disclosed above may be provided.

In another aspect, a UE for executing the signal transmission method disclosed above may be provided.

In another aspect, a device for controlling a UE to execute the signal transmission method disclosed above may be provided.

In another aspect, provided herein is a method of receiving a signal by a base station in a wireless communication system. The method may include receiving, from a user equipment (UE), information about antenna groups configured based on a plurality of antennas of the UE, transmitting, to the UE, information about a co-phase between the antenna groups, transmitting downlink control information (DCI) for uplink scheduling to the UE, and receiving an uplink signal based on the DCI. A codebook for precoding of the uplink signal may be determined based on the information about the co-phase between the antenna groups.

In another aspect, a base station for executing the signal reception method disclosed above may be provided.

[Advantageous Effects]

According to the present disclosure, wireless signal transmission and reception may be efficiently performed in a wireless communication system.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

[Description of Drawings]

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates exemplary mapping of physical channels in a slot.
FIG. 5 illustrates an exemplary PDSCH and acknowledgment/negative acknowledgment (ACK/NACK) transmission process.
FIG. 6 illustrates an exemplary PUSCH transmission process.
FIG. 7 illustrates an example of a channel state information (CSI) related procedure.
FIG. 8 illustrates multi-transmission and reception point (TRP) transmission.
FIG. 9 illustrates various forms of 8-TX antenna of the UE.
FIG. 10 illustrates basis vectors for the antenna structure in FIG. 9.
FIG. 11 illustrates the transmission and reception procedure based on a single DCI in a multiple TRP scenario.
FIG. 12 illustrates an example implementation of a method of operating a UE in a wireless communication system according to one embodiment of the present disclosure.
FIG. 13 illustrates an example implementation of a method of operating a BS in a wireless communication system according to one embodiment of the present disclosure.
FIGS. 14 to 17 are diagrams illustrating an example of a communication system 1 and wireless devices applicable to the present disclosure.
FIG. 18 is a diagram illustrating an example of a discontinuous reception (DRX) operation applicable to the present disclosure.

[Detailed Description]

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent invention or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

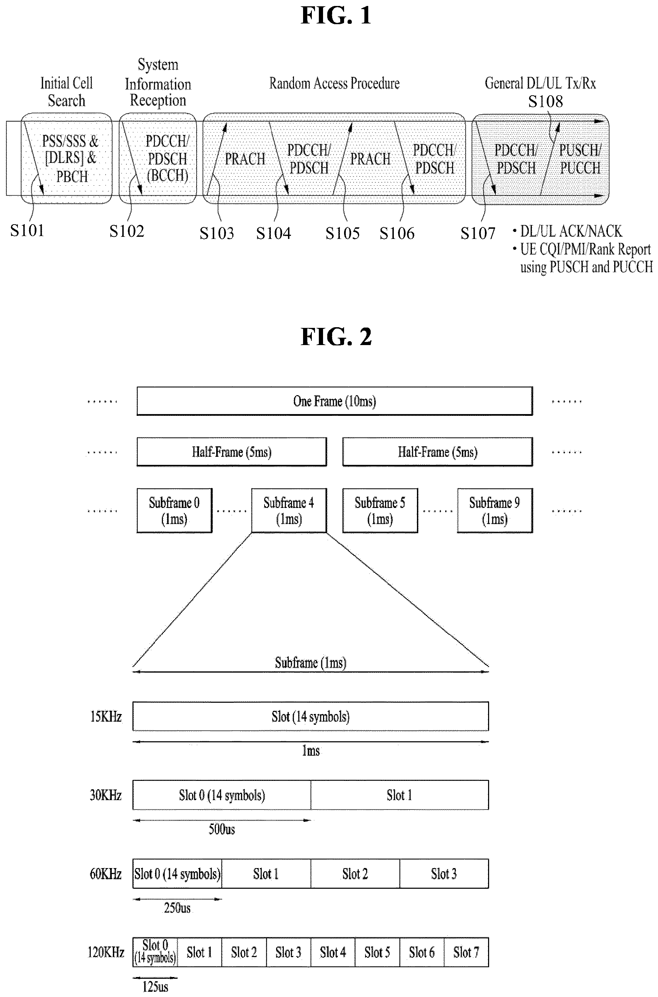

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS (15*2$^u$) | N$^{slot}_{symb}$ | N$^{frame,u}_{slot}$ | N$^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| N$^{slot}_{symb}$: Number of symbols in a slot<br>N$^{frame,u}_{slot}$: Number of slots in a frame<br>N$^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS (15*2$^u$) | N$^{slot}_{symb}$ | N$^{frame,u}_{slot}$ | N$^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

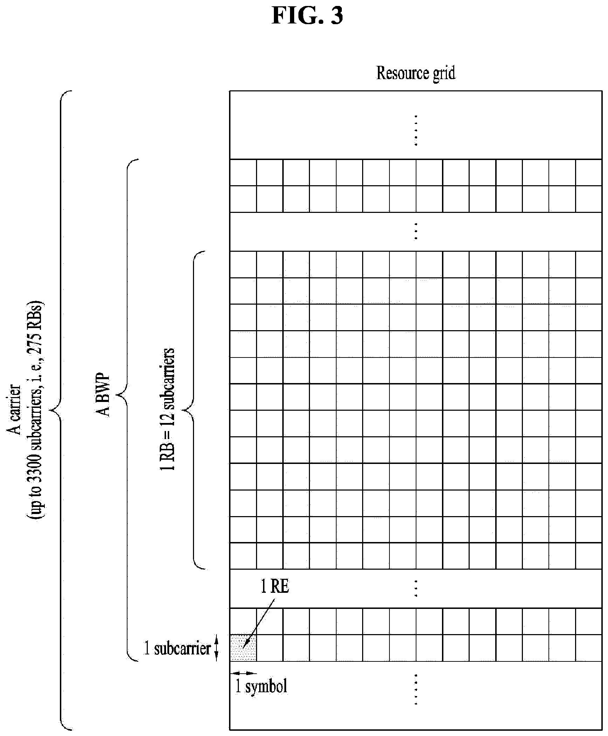

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

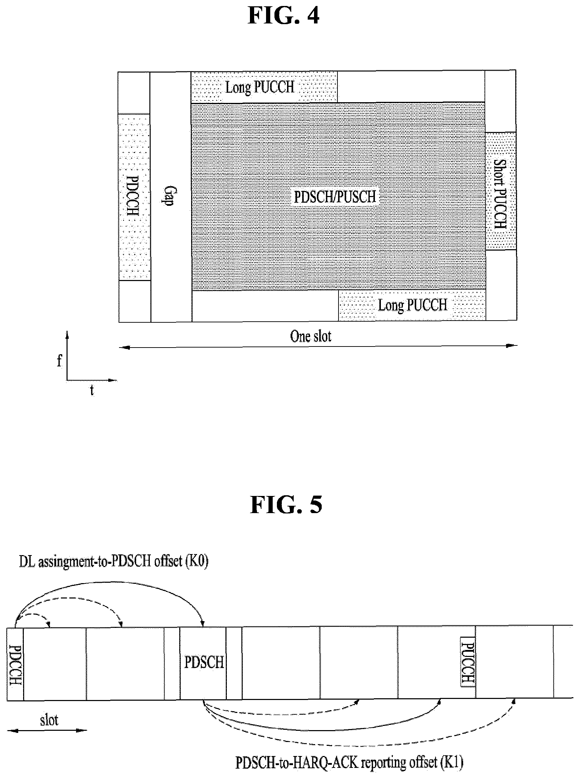

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g.,

an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured through higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

controlResourceSetId: A CORESET related to an SS.
monitoringSlotPeriodicityAndOffset: A PDCCH monitoring periodicity (in slots) and a PDCCH monitoring offset (in slots).
monitoringSymbolsWithinSlot: PDCCH monitoring symbols in a slot (e.g., the first symbol(s) of a CORESET).
nrofCandidates: The number of PDCCH candidates (one of 0, 1, 2, 3, 4, 5, 6, and 8) for each AL={1, 2, 4, 8, 16}.

An occasion (e.g., time/frequency resources) in which the UE is to monitor PDCCH candidates is defined as a PDCCH (monitoring) occasion. One or more PDCCH (monitoring) occasions may be configured in a slot.
Table 3 shows the characteristics of each SS.

[Table 3]

| Type | Search Space | RNTI | Use Case |
|---|---|---|---|
| Type0-PDCCH | Comm on | SI-RNTI on a primary cell | SIB Decoding |
| Type0A -PDCCH | Comm on | SI-RNTI on a primary cell | SIB Decoding |
| Type1-PDCCH | Comm on | RA-RNTI or TC-RNTI on a primary cell | Msg2, Msg4 decoding in RACH |
| Type2-PDCCH | Comm on | P-RNTI on a primary cell | Paging Decoding |
| Type3-PDCCH | Comm on | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

SR (Scheduling Request): Information used to request UL-SCH resources.

HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.

CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PU CCH format | Length in OFDM symbols $N_{symb}^{PUCCH}$ symb | Numb er of bits | Usage | Etc |
|---|---|---|---|---|
| 0 | 1-2 | $\leq 2$ | HARQ, SR | Sequence selection |
| 1 | 4-14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured to the UE may be configured for PUCCH transmission. At least a primary cell may be set as a cell for the PUCCH transmission. At least one PUCCH cell group may be configured to the UE based on at least one cell where the PUCCH transmission is configured, and each PUCCH cell group includes one or two or more cells. A PUCCH cell group may be simply referred to as a PUCCH group. The PUCCH transmission may be configured not only in the primary cell but also in a secondary cell (Scell). The primary cell belongs to a primary PUCCH group, and the PUCCH-SCell where the PUCCH transmission is configured belongs to a secondary PUCCH group. For cells belonging to the primary PUCCH group, a PUCCH on the primary cell may be used. For cells belonging to the secondary PUCCH group, a PUCCH on the PUCCH-SCell may be used.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner. Table 6 is an excerpt from the UL precoding and the codebook therefor as defined in the NR standard document TS38.211.

[Table 6]

The block of vectors $\left[ y^{(0)}(i) \quad ... \quad y^{(\upsilon-1)}(i) \right]^T$, $i = 0,1,...,M_{symb}^{layer} - 1$ shall be precoded according to

$$\begin{bmatrix} z^{(p_0)}(i) \\ \vdots \\ z^{(p_{\rho-1})}(i) \end{bmatrix} = W \begin{bmatrix} y^{(0)}(i) \\ \vdots \\ y^{(\upsilon-1)}(i) \end{bmatrix}$$

where $i = 0,1,...,M_{symb}^{ap} - 1$, $M_{symb}^{ap} = M_{symb}^{layer}$. The set of antenna ports $\{p_0,...,p_{\rho-1}\}$ shall be determined according to the procedure in [6, TS 38.214].

For non-codebook-based transmission, the precoding matrix $W$ equals the identity matrix.

For codebook-based transmission, the precoding matrix $W$ is given by $W = 1$ for single-layer transmission on a single antenna port, otherwise by Tables 6.3.1.5-1 to 6.3.1.5-7 with the TPMI index obtained from the DCI scheduling the uplink transmission or the higher layer parameters according to the procedure in [6, TS 38.214].

When the higher-layer parameter *txConfig* is not configured, the precoding matrix $W = 1$.

**Table 6.3.1.5-1: Precoding matrix $W$ for single-layer transmission using two antenna ports.**

| TPMI index | $W$ (ordered from left to right in increasing order of TPMI index) | | | | | | | |
|---|---|---|---|---|---|---|---|---|
| 0 − 5 | $\dfrac{1}{\sqrt{2}}\begin{bmatrix}1\\0\end{bmatrix}$ | $\dfrac{1}{\sqrt{2}}\begin{bmatrix}0\\1\end{bmatrix}$ | $\dfrac{1}{\sqrt{2}}\begin{bmatrix}1\\1\end{bmatrix}$ | $\dfrac{1}{\sqrt{2}}\begin{bmatrix}1\\-1\end{bmatrix}$ | $\dfrac{1}{\sqrt{2}}\begin{bmatrix}1\\j\end{bmatrix}$ | $\dfrac{1}{\sqrt{2}}\begin{bmatrix}1\\-j\end{bmatrix}$ | - | - |

**Table 6.3.1.5-2: Precoding matrix $W$ for single-layer transmission using four antenna ports with transform precoding enabled.**

| TPMI index | $W$ (ordered from left to right in increasing order of TPMI index) | | | | | | | |
|---|---|---|---|---|---|---|---|---|
| 0 − 7 | $\dfrac{1}{2}\begin{bmatrix}1\\0\\0\\0\end{bmatrix}$ | $\dfrac{1}{2}\begin{bmatrix}0\\1\\0\\0\end{bmatrix}$ | $\dfrac{1}{2}\begin{bmatrix}0\\0\\1\\0\end{bmatrix}$ | $\dfrac{1}{2}\begin{bmatrix}0\\0\\0\\1\end{bmatrix}$ | $\dfrac{1}{2}\begin{bmatrix}1\\0\\1\\0\end{bmatrix}$ | $\dfrac{1}{2}\begin{bmatrix}1\\0\\-1\\0\end{bmatrix}$ | $\dfrac{1}{2}\begin{bmatrix}1\\0\\j\\0\end{bmatrix}$ | $\dfrac{1}{2}\begin{bmatrix}1\\0\\-j\\0\end{bmatrix}$ |

| TPMI index | $W$ |
|---|---|
| 8 – 15 | $\frac{1}{2}\begin{bmatrix}0\\1\\0\\1\end{bmatrix}$ $\frac{1}{2}\begin{bmatrix}0\\1\\0\\-1\end{bmatrix}$ $\frac{1}{2}\begin{bmatrix}0\\1\\0\\j\end{bmatrix}$ $\frac{1}{2}\begin{bmatrix}0\\1\\0\\-j\end{bmatrix}$ $\frac{1}{2}\begin{bmatrix}1\\1\\1\\-1\end{bmatrix}$ $\frac{1}{2}\begin{bmatrix}1\\1\\j\\j\end{bmatrix}$ $\frac{1}{2}\begin{bmatrix}1\\1\\-1\\1\end{bmatrix}$ $\frac{1}{2}\begin{bmatrix}1\\1\\-j\\-j\end{bmatrix}$ |
| 16 – 23 | $\frac{1}{2}\begin{bmatrix}1\\j\\1\\j\end{bmatrix}$ $\frac{1}{2}\begin{bmatrix}1\\j\\j\\1\end{bmatrix}$ $\frac{1}{2}\begin{bmatrix}1\\j\\-1\\-j\end{bmatrix}$ $\frac{1}{2}\begin{bmatrix}1\\j\\-j\\-1\end{bmatrix}$ $\frac{1}{2}\begin{bmatrix}1\\-1\\1\\1\end{bmatrix}$ $\frac{1}{2}\begin{bmatrix}1\\-1\\j\\-j\end{bmatrix}$ $\frac{1}{2}\begin{bmatrix}1\\-1\\-1\\-1\end{bmatrix}$ $\frac{1}{2}\begin{bmatrix}1\\-1\\-j\\j\end{bmatrix}$ |
| 24 – 27 | $\frac{1}{2}\begin{bmatrix}1\\-j\\1\\-j\end{bmatrix}$ $\frac{1}{2}\begin{bmatrix}1\\-j\\j\\1\end{bmatrix}$ $\frac{1}{2}\begin{bmatrix}1\\-j\\-1\\j\end{bmatrix}$ $\frac{1}{2}\begin{bmatrix}1\\-j\\-j\\1\end{bmatrix}$ - - - - |

**Table 6.3.1.5-3: Precoding matrix $W$ for single-layer transmission using four antenna ports with transform precoding disabled.**

| TPMI index | $W$ (ordered from left to right in increasing order of TPMI index) |
|---|---|
| 0 – 7 | $\frac{1}{2}\begin{bmatrix}1\\0\\0\\0\end{bmatrix}$ $\frac{1}{2}\begin{bmatrix}0\\1\\0\\0\end{bmatrix}$ $\frac{1}{2}\begin{bmatrix}0\\0\\1\\0\end{bmatrix}$ $\frac{1}{2}\begin{bmatrix}0\\0\\0\\1\end{bmatrix}$ $\frac{1}{2}\begin{bmatrix}1\\0\\1\\0\end{bmatrix}$ $\frac{1}{2}\begin{bmatrix}1\\0\\-1\\0\end{bmatrix}$ $\frac{1}{2}\begin{bmatrix}1\\0\\j\\0\end{bmatrix}$ $\frac{1}{2}\begin{bmatrix}1\\0\\-j\\0\end{bmatrix}$ |
| 8 – 15 | $\frac{1}{2}\begin{bmatrix}0\\1\\0\\1\end{bmatrix}$ $\frac{1}{2}\begin{bmatrix}0\\1\\0\\-1\end{bmatrix}$ $\frac{1}{2}\begin{bmatrix}0\\1\\0\\j\end{bmatrix}$ $\frac{1}{2}\begin{bmatrix}0\\1\\0\\-j\end{bmatrix}$ $\frac{1}{2}\begin{bmatrix}1\\1\\1\\1\end{bmatrix}$ $\frac{1}{2}\begin{bmatrix}1\\1\\j\\j\end{bmatrix}$ $\frac{1}{2}\begin{bmatrix}1\\1\\-1\\-1\end{bmatrix}$ $\frac{1}{2}\begin{bmatrix}1\\1\\-j\\-j\end{bmatrix}$ |
| 16 – 23 | $\frac{1}{2}\begin{bmatrix}1\\j\\1\\j\end{bmatrix}$ $\frac{1}{2}\begin{bmatrix}1\\j\\j\\-1\end{bmatrix}$ $\frac{1}{2}\begin{bmatrix}1\\j\\-1\\-j\end{bmatrix}$ $\frac{1}{2}\begin{bmatrix}1\\j\\-j\\1\end{bmatrix}$ $\frac{1}{2}\begin{bmatrix}1\\-1\\1\\-1\end{bmatrix}$ $\frac{1}{2}\begin{bmatrix}1\\-1\\j\\-j\end{bmatrix}$ $\frac{1}{2}\begin{bmatrix}1\\-1\\-1\\1\end{bmatrix}$ $\frac{1}{2}\begin{bmatrix}1\\-1\\-j\\j\end{bmatrix}$ |
| 24 – 27 | $\frac{1}{2}\begin{bmatrix}1\\-j\\1\\-j\end{bmatrix}$ $\frac{1}{2}\begin{bmatrix}1\\-j\\j\\1\end{bmatrix}$ $\frac{1}{2}\begin{bmatrix}1\\-j\\-1\\j\end{bmatrix}$ $\frac{1}{2}\begin{bmatrix}1\\-j\\-j\\-1\end{bmatrix}$ - - - - |

**Table 6.3.1.5-4: Precoding matrix $W$ for two-layer transmission using two antenna ports with transform precoding disabled.**

| TPMI index | $W$ (ordered from left to right in increasing order of TPMI index) |
|---|---|

| 0 – 2 | $\frac{1}{\sqrt{2}}\begin{bmatrix}1 & 0\\ 0 & 1\end{bmatrix}$ | $\frac{1}{2}\begin{bmatrix}1 & 1\\ 1 & -1\end{bmatrix}$ | $\frac{1}{2}\begin{bmatrix}1 & 1\\ j & -j\end{bmatrix}$ | | |

**Table 6.3.1.5-5: Precoding matrix $W$ for two-layer transmission using four antenna ports with transform precoding disabled.**

| TPMI index | $W$ (ordered from left to right in increasing order of TPMI index) | | | |
|---|---|---|---|---|
| 0 – 3 | $\frac{1}{2}\begin{bmatrix}1 & 0\\ 0 & 1\\ 0 & 0\\ 0 & 0\end{bmatrix}$ | $\frac{1}{2}\begin{bmatrix}1 & 0\\ 0 & 0\\ 0 & 1\\ 0 & 0\end{bmatrix}$ | $\frac{1}{2}\begin{bmatrix}1 & 0\\ 0 & 0\\ 0 & 0\\ 0 & 1\end{bmatrix}$ | $\frac{1}{2}\begin{bmatrix}0 & 0\\ 1 & 0\\ 0 & 1\\ 0 & 0\end{bmatrix}$ |
| 4 – 7 | $\frac{1}{2}\begin{bmatrix}0 & 0\\ 1 & 0\\ 0 & 0\\ 0 & 1\end{bmatrix}$ | $\frac{1}{2}\begin{bmatrix}0 & 0\\ 0 & 0\\ 1 & 0\\ 0 & 1\end{bmatrix}$ | $\frac{1}{2}\begin{bmatrix}1 & 0\\ 0 & 1\\ 1 & 0\\ 0 & -j\end{bmatrix}$ | $\frac{1}{2}\begin{bmatrix}1 & 0\\ 0 & 1\\ 1 & 0\\ 0 & j\end{bmatrix}$ |
| 8 – 11 | $\frac{1}{2}\begin{bmatrix}1 & 0\\ 0 & 1\\ -j & 0\\ 0 & 1\end{bmatrix}$ | $\frac{1}{2}\begin{bmatrix}1 & 0\\ 0 & 1\\ -j & 0\\ 0 & -1\end{bmatrix}$ | $\frac{1}{2}\begin{bmatrix}1 & 0\\ 0 & 1\\ -1 & 0\\ 0 & -j\end{bmatrix}$ | $\frac{1}{2}\begin{bmatrix}1 & 0\\ 0 & 1\\ -1 & 0\\ 0 & j\end{bmatrix}$ |
| 12 – 15 | $\frac{1}{2}\begin{bmatrix}1 & 0\\ 0 & 1\\ j & 0\\ 0 & 1\end{bmatrix}$ | $\frac{1}{2}\begin{bmatrix}1 & 0\\ 0 & 1\\ j & 0\\ 0 & -1\end{bmatrix}$ | $\frac{1}{2\sqrt{2}}\begin{bmatrix}1 & 1\\ 1 & 1\\ 1 & -1\\ 1 & -1\end{bmatrix}$ | $\frac{1}{2\sqrt{2}}\begin{bmatrix}1 & 1\\ 1 & 1\\ j & -j\\ j & -j\end{bmatrix}$ |
| 16 – 19 | $\frac{1}{2\sqrt{2}}\begin{bmatrix}1 & 1\\ j & j\\ 1 & -1\\ j & -j\end{bmatrix}$ | $\frac{1}{2\sqrt{2}}\begin{bmatrix}1 & 1\\ j & j\\ j & -j\\ -1 & 1\end{bmatrix}$ | $\frac{1}{2\sqrt{2}}\begin{bmatrix}1 & 1\\ -1 & -1\\ 1 & -1\\ -1 & 1\end{bmatrix}$ | $\frac{1}{2\sqrt{2}}\begin{bmatrix}1 & 1\\ -1 & -1\\ j & -j\\ -j & j\end{bmatrix}$ |
| 20 – 21 | $\frac{1}{2\sqrt{2}}\begin{bmatrix}1 & 1\\ -j & -j\\ 1 & -1\\ -j & j\end{bmatrix}$ | $\frac{1}{2\sqrt{2}}\begin{bmatrix}1 & 1\\ -j & -j\\ j & -j\\ 1 & -1\end{bmatrix}$ | - | - |

**Table 6.3.1.5-6: Precoding matrix $W$ for three-layer transmission using four antenna ports with transform precoding disabled.**

| TPMI index | $W$ (ordered from left to right in increasing order of TPMI index) | | | |
|---|---|---|---|---|
| 0 – 3 | $\frac{1}{2}\begin{bmatrix}1 & 0 & 0\\ 0 & 1 & 0\\ 0 & 0 & 1\\ 0 & 0 & 0\end{bmatrix}$ | $\frac{1}{2}\begin{bmatrix}1 & 0 & 0\\ 0 & 1 & 0\\ 1 & 0 & 0\\ 0 & 0 & 1\end{bmatrix}$ | $\frac{1}{2}\begin{bmatrix}1 & 0 & 0\\ 0 & 1 & 0\\ -1 & 0 & 0\\ 0 & 0 & 1\end{bmatrix}$ | $\frac{1}{2\sqrt{3}}\begin{bmatrix}1 & 1 & 1\\ 1 & -1 & 1\\ 1 & 1 & -1\\ 1 & -1 & -1\end{bmatrix}$ |

| 4 – 6 | $\dfrac{1}{2\sqrt{3}}\begin{bmatrix} 1 & 1 & 1 \\ 1 & -1 & 1 \\ j & j & -j \\ j & -j & -j \end{bmatrix}$ | $\dfrac{1}{2\sqrt{3}}\begin{bmatrix} 1 & 1 & 1 \\ -1 & 1 & -1 \\ 1 & 1 & -1 \\ -1 & 1 & 1 \end{bmatrix}$ | $\dfrac{1}{2\sqrt{3}}\begin{bmatrix} 1 & 1 & 1 \\ -1 & 1 & -1 \\ j & j & -j \\ -j & j & j \end{bmatrix}$ | - |

**Table 6.3.1.5-7: Precoding matrix $W$ for four-layer transmission using four antenna ports with transform precoding disabled.**

| TPMI index | $W$ (ordered from left to right in increasing order of TPMI index) | | | |
|---|---|---|---|---|
| 0 – 3 | $\dfrac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}$ | $\dfrac{1}{2\sqrt{2}}\begin{bmatrix} 1 & 1 & 0 & 0 \\ 0 & 0 & 1 & 1 \\ 1 & -1 & 0 & 0 \\ 0 & 0 & 1 & -1 \end{bmatrix}$ | $\dfrac{1}{2\sqrt{2}}\begin{bmatrix} 1 & 1 & 0 & 0 \\ 0 & 0 & 1 & 1 \\ j & -j & 0 & 0 \\ 0 & 0 & j & -j \end{bmatrix}$ | $\dfrac{1}{4}\begin{bmatrix} 1 & 1 & 1 & 1 \\ 1 & -1 & 1 & -1 \\ 1 & 1 & -1 & -1 \\ 1 & -1 & -1 & 1 \end{bmatrix}$ |
| 4 | $\dfrac{1}{4}\begin{bmatrix} 1 & 1 & 1 & 1 \\ 1 & -1 & 1 & -1 \\ j & j & -j & -j \\ j & -j & -j & j \end{bmatrix}$ | - | - | - |

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

Frequency domain resource assignment: Indicates an RB set assigned to a PDSCH.

Time domain resource assignment: Indicates K0 and the starting position (e.g., OFDM symbol index) and length (e.g., the number of OFDM symbols) of the PDSCH in a slot

PDSCH-to-HARQ_feedback timing indicator: Indicates K1.

HARQ process number (4 bits): Indicates the HARQ process ID of data (e.g., a PDSCH or TB).

PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

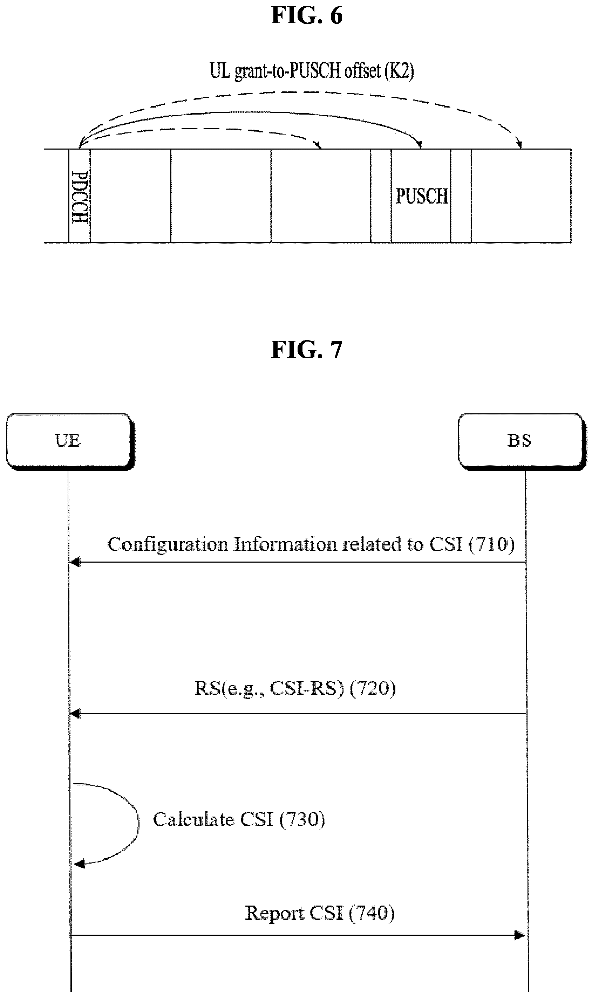

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.

Frequency domain resource assignment: Indicates an RB set assigned to the PUSCH.

Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

CSI related operation

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.

- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.
- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).
- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.
- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.
- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

Quasi-co location (QCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of a plurality of transmission configuration indicator (TCI) state configurations may be configured in the UE through a higher layer parameter PDSCH-Config. Each TCI state is linked to a QCL configuration parameter between one or two DL reference signals and the DM-RS port of a PDSCH. The QCL may include qcl-Type1 for a first DL RS and qcl-Type2 for a second DL RS. The QCL type may correspond to one of the following.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

Operations related to multiple transmission and reception points (M-TRPs)

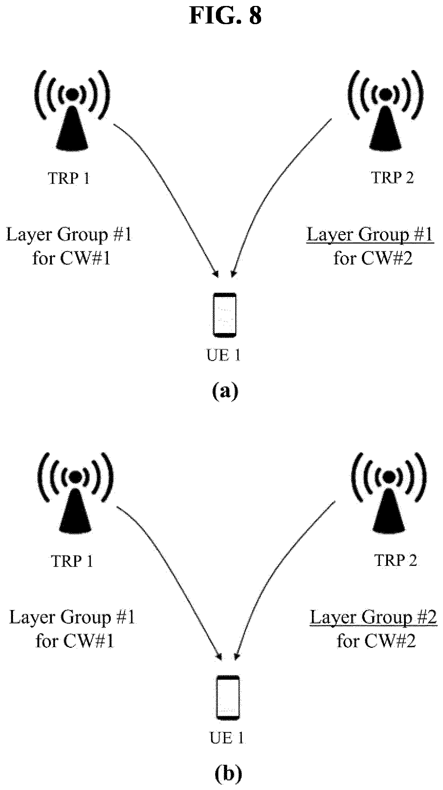

FIG. 8 illustrates multi-TRP (M-TRP) transmission. Referring to FIG. 8(a), a group of layers transmitting the same codeword (CW) (or transport block, TB) correspond to different TRPs. Referring to FIG. 8(b), different CWs are transmitted through layer groups of different TRPs. In this case, it may be assumed that the TBs corresponding to CW #1 and CW #2 in the drawing are the same. In other words, CW #1 and CW #2 mean that the same TB is converted into different CWs through channel coding, etc., by different TRPs. Therefore, it may be considered as an example of repeated transmission of the same TB. In the case of FIG. 8(b), there may be a drawback of a higher coding rate corresponding to the TB, compared to FIG. 8(a). However, FIG. 8(b) has the advantage that, depending on the channel environment, the coding rate may be adjusted by indicating different redundancy version (RV) values for encoded bits generated from the same TB or the modulation order of each CW may be adjusted.

According to the method illustrated in FIGS. 8(a) and 8(b), the same TB is repeatedly transmitted through different layer groups. In addition, as each layer group is transmitted by different TRPs/panels, the probability that the UE successfully receives data may increase. This is referred to as a spatial division multiplexing (SDM) based M-TRP URLLC transmission method. The layers belonging to different layer groups are transmitted through DMRS ports that belong to different DMRS code division multiplexing (CDM) groups.

Although the aforementioned M-TRP-related content has been explained based on the SDM method using different layers, it may be extended and applied to an FDM method based on different frequency domain resources (e.g., RB/PRB sets) and/or a TDM method based on different time domain resources (e.g., slots, symbols, sub-symbols, etc.).

A DL M-TRP URLLC transmission method refers to a method where M-TRPs transmit the same data/DCI using different spatial (e.g., layer/port), time, or frequency resources. For example, TRP 1 may transmit specific data/DCI on resource 1, and TRP 2 may transmit the specific data/DCI (i.e., the same data/DCI) on resource 2.

In other words, when the DL M-TRP URLLC transmission method is configured, the UE may receive the same data/DCI using different spatial, time, or frequency resources. In this case, the UE may receive from the BS indications regarding a QCL RS/type (i.e., DL TCI state) to be used for the spatial, time, or frequency resources where the data/DCI is received.

For example, if the data/DCI is received on both resource 1 and resource 2, the UE may be provided by the BS with a DL TCI state used for resource 1 and a DL TCI state used for resource 2. By receiving the data/DCI on both resource 1 and resource 2, high reliability may be achieved. Such M-TRP URLLC transmission method may be applied to a PDSCH/PDCCH.

A UL M-TRP URLLC transmission method refers to a method where M-TRPs receive the same data/UCI from a single UE using different spatial, time, or frequency resources. For example, TRP 1 may receive the same data/UCI from the UE on resource 1, and TRP 2 may receive the same data/UCI from the UE on resource 2. Furthermore, TRP 1 and TRP 2 may share the data/UCI received from the UE through a backhaul link (connected between the TRPs).

In other words, when the UL M-TRP URLLC transmission method is configured, the UE may transmit the same data/UCI to each TRP using different spatial, time, or frequency resources. In this case, the UE may receive from the BS indications regarding a Tx beam and Tx power (i.e., UL TCI state) to be used on the spatial, time, or frequency resources where the same data/UCI is transmitted. For example, if the same data/UCI is transmitted on resource 1 and resource 2, the UE may be provided with a UL TCI state to be used for resource 1 and a UL TCI state to be used for resource 2 from the BS. The UL M-TRP URLLC transmission method may be applied to a PUSCH/PUCCH.

In the descriptions of the present disclosure, when data/DCI/UCI is transmitted/received on a specific spatial, time, or frequency resource, using (or mapping) a specific TCI state (or TCI) may mean the following: in the case of DL, it may imply that the UE estimates a channel from a DMRS using a QCL type and QCL RS indicated by the specific TCI state for the specific spatial, time, or frequency resource and then receives/demodulates the data/DCI/UCI using the estimated channel.

When data/DCI/UCI is received/transmitted on a specific spatial, time, or frequency resource, using (or mapping) a specific TCI state (or TCI) may mean the following: in the case of UL, it may mean that the UE transmits/modulates a DMRS and data/UCI using a Tx beam and/or Tx power indicated by the specific TCI state for the specific spatial, time, or frequency resource.

The UL TCI state may include information on the Tx beam or Tx power of the UE. Additionally, the BS may configure the UE with spatial relation information rather than the TCI state through other parameters.

For example, the UL TCI state may be directly indicated to the UE through UL grant DCI. Alternatively, the UL TCI state may refer to spatial relation information on a sounding reference signal (SRS) resource indicated by an SRS resource indicator (SRI) field in the UL grant DCI. Alternatively, the UL TCI state may refer to open-loop (OL) Tx power control parameters associated with a value indicated by the SRI field in the UL grant DCI.

Here, the OL Tx power control parameters may include, for example, j (the index for the OP parameter(s) Po and alpha (up to 32 parameter value sets per cell)), q_d (the index of a DL RS resource for path loss (PL) measurement (up to four measurements per cell), and/or I (the index of a closed-loop power control process (up to two processes per cell))

An M-TRP eMBB transmission method refers to a method in which M-TRPs transmit different data/DCI using different spatial, temporal, or frequency resources. When the M-TRP eMBB transmission method is configured, the UE may be provided with multiple TCI states by the BS via DCI, and the UE may assume that data received using QCL RSs indicated by each of the multiple TCI states are different.

When an M-TRP URLLC RNTI and an M-TRP eMBB RNTI are distinguished and used separately, the UE may determine whether specific transmission is M-TRP URLLC transmission or M-TRP eMBB transmission. For example, if an RNTI for URLLC is used and CRC-masked for DCI, the UE may identify that corresponding transmission is URLLC transmission. Similarly, if an RNTI for eMBB is used and CRC-masked for DCI, the UE may identify that corresponding transmission is eMBB transmission. As another example, the BS may configure the UE with the M-TRP URLLC transmission/reception method or the M-TRP eMBB transmission/reception method through new signaling.

For the sake of convenience, it is assumed in the present disclosure that two TRPs cooperate to perform transmission/reception operations, but the present disclosure is not limited thereto. In other words, the present disclosure may be extended and applied to environments with three or more M-TRPs as well as to environments where transmission/reception is performed with different panels or beams within the same TRP. The UE may recognize different TRPs as different TCI states. When the UE transmits/receives data/DCI/UCI using TCI state 1, it means that the UE is transmitting/receiving data/DCI/UCI from or to TRP 1.

The present disclosure may be used in situations where M-TRPs cooperatively transmit a PDCCH (by repeatedly transmitting the same PDCCH or dividing the transmission). Additionally, the present disclosure may be applied in situations where M-TRPs cooperatively transmit a PDSCH or cooperatively receives a PUSCH/PUCCH.

When a plurality of BSs (i.e., M-TRPs) repeatedly transmit the same PDCCH, it may mean that the same DCI is transmitted over multiple PDCCH candidates, which is equivalent to meaning that multiple BSs repeatedly transmit the same DCI. In this case, two DCIs with the same format/size/payload may be considered to be the same.

Alternatively, even when the payloads of two DCIs are different, if the scheduling results are the same, the two DCIs may be considered identical. For example, a time domain resource allocation (TDRA) field in DCI may determine the position of a data slot/symbol and the position of an ACK/NACK (A/N) slot/symbol relative to the time of receiving the DCI.

In this case, if DCI received at time n and DCI received at time n+1 indicate the UE with the same scheduling results, the TDRA fields of the two DCIs may differ, and as a result, the DCI payloads may be different. Therefore, even if the payloads of the two DCIs are different, if the scheduling results are the same, the two DCIs may be considered identical. Here, the repetition number R may be directly indicated by the BS to the UE or mutually agreed therebetween.

Alternatively, even when the payloads of the two DCIs are different and the scheduling results are not the same, if the scheduling result of one of the two DCIs is a subset of the scheduling result of the other DCI, the two DCIs may be considered identical.

For example, if the same data is (time division multiplexed) TDMed and transmitted repeatedly N times, DCI 1 received before first data may indicate (or schedule) N data repetitions, while DCI 2 received before second data may indicate (or schedule) N-1 data repetitions. In this case, the scheduling result (or data) of DCI 2 is a subset of the scheduling result (or data) of DCI 1, and the two DCIs have the same scheduling result for the same data. Therefore, in this case, the two DCIs may be considered identical.

When a plurality of BSs (i.e., M-TRPs) divide the transmission of the same PDCCH, it may mean that one DCI is transmitted through one PDCCH candidate, TRP 1 transmits a part of the resources defined for the PDCCH candidate, and TRP 2 transmits the remaining resources.

For example, if TRP 1 and TRP 2 divide the transmission of a PDCCH candidate corresponding to aggregation level (AL) m1 + m2, the PDCCH candidate may be divided into PDCCH candidate 1 corresponding to AL m1 and PDCCH candidate 2 corresponding to AL m2. In addition, TRP 1 may transmit PDCCH candidate 1, and TRP 2 may transmit PDCCH candidate 2. In this case, TRP 1 and TRP 2 may transmit PDCCH candidate 1 and PDCCH candidate 2 on different time/frequency resources. After receiving PDCCH candidate 1 and PDCCH candidate 2, the UE may combine PDCCH candidate 1 and PDCCH candidate 2 to form a PDCCH candidate corresponding to AL m1 + m2 and attempt DCI decoding.

In this case, dividing and transmitting the same DCI across multiple PDCCH candidates may be implemented in the following two methods.

The first method involves encoding the payload of DCI (e.g., control information + CRC) through a single channel encoder (e.g., a polar encoder) and then dividing and transmitting the encoded DCI payload via two TRPs. In other words, the first method refers to transmitting coded bits, obtained as a result of encoding, by dividing the coded bits via the two TRPs. In this case, the coded bits transmitted by each TRP may include the entire DCI payload, but the present disclosure is not limited thereto. That is, only a portion of the DCI payload may be encoded.

The second method involves dividing the payload of DCI (e.g., control information + CRC) into two DCIs (e.g., DCI 1 and DCI 2) and then encoding each of the two DCIs through a channel encoder (e.g., a polar encoder). Thereafter, each of two TRPs may transmit the coded bits corresponding to DCI 1 and DCI 2 to the UE.

When the transmission of a PDCCH is repeated/divided, it may be understood as transmitting the PDCCH multiple times across several TOs.

Generally, a TO refers to each channel transmitted at different times when multiple channels are TDMed, each channel transmitted on different frequencies/RBs when multiple channels are frequency division multiplexed (FDMed), or each channel transmitted on different layers/beams/DMRS ports when multiple channels are spatial division multiplexed (SDMed). Each TO may be mapped to one TCI state. When the same channel is repeatedly transmitted, complete data/DCI/UCI is transmitted on one TO, and a receiver may receive multiple TOs to increase the success rate of reception.

In the case of PDCCH transmission, the TO may refer to a specific time and/or frequency resource unit where the PDCCH is transmitted. For example, if the PDCCH is transmitted multiple times across slots 1, 2, 3, and 4 (on a specific RB), the TO may refer to each slot. In another example, if the PDCCH is transmitted multiple times across RB sets 1, 2, 3, and 4 (in a specific slot), the TO may refer to each RB set. In another example, if the PDCCH is transmitted multiple times at different times and frequencies, the TO may refer to each time/frequency resource. Additionally, the TCI state used for DMRS channel estimation may be set differently for each TO, and TOs with different TCI states may be assumed to be transmitted by different TRPs/panels.

When a plurality of BSs repeat or divide the transmission of a PDCCH, it may mean that the PDCCH is transmitted across multiple TOs, and the union of TCI states configured for the TOs includes two or more TCI states. For example, if the PDCCH is transmitted across TOs 1, 2, 3, and 4, TCI states 1, 2, 3, and 4 may be configured for TOs 1, 2, 3, and 4, respectively, which indicates that TRP i cooperatively transmits the PDCCH on TO i.

In the descriptions of the present disclosure, when the UE repeatedly transmits the same PUSCH to a plurality of BSs (i.e., M-TRPs), it may mean that the UE transmits the same data over multiple PUSCHs, and each PUSCH may be optimized for the UL channel of a different TRP.

For example, the UE may repeatedly transmit the same data on PUSCH 1 and PUSCH 2. In this case, PUSCH 1 is transmitted using UL TCI state 1 for TRP 1. For PUSCH transmission, link adaptation parameters such as a precoder, MCS, etc. are also scheduled with values optimized for the channel of TRP 1. PUSCH 2 is transmitted using UL TCI state 2 for TRP 2, For PUSCH transmission, link adaptation parameters such as a precoder, MCS, etc. are also scheduled with values optimized for the channel of TRP 2. In this case, PUSCH 1 and PUSCH 2, which are repeatedly transmitted, may be transmitted at different times, and PUSCH 1 and PUSCH 2 may be TDMed, FDMed, or SDMed.

Additionally, when the UE divides the same PUSCH and transmits the divided PUSCH to a plurality of BSs (i.e., M-TRPs), it may mean that the UE transmits a single piece of data over one PUSCH, but the resources allocated to the PUSCH are divided and transmitted, optimized for UL channels of different TRPs.

For example, the UE may transmit the same data on a 10-symbol PUSCH. In this case, the UE may transmit the first 5 symbols using UL TCI state 1 for TRP 1. The UE may be scheduled with link adaptation parameters such as a precoder, MCS, etc. and values optimized for the channel of TRP 1 and then transmit the 5-symbol PUSCH to TRP 1. The UE may transmit the remaining 5 symbols using UL TCI state 2 for TRP 2. The UE may be scheduled with link adaptation parameters such as a precoder, MCS, etc. and values optimized for the channel of TRP 2 and then transmit the remaining 5-symbol PUSCH (to TRP 2).

In the above example, dividing a single PUSCH into time resources and performing TDM between transmission to TRP 1 and transmission to TRP 2 is described, but the present disclosure is not limited thereto. The UE may also use FDM or SDM to divide and transmit the same PUSCH to a plurality of BSs.

The UE may repeatedly transmit a PUCCH to a plurality of BSs or divide and transmit the same PUCCH (in a similar way to PUSCH transmission).

The present disclosure may be extended and applied to various channels including the PUSCH/-PUCCH/PDSCH/PDCCH. Additionally, the present disclosure may be applied in situations where the channels are repeatedly transmitted on different spatial/temporal/frequency resources as well as in situations where the channels are transmitted in a divided manner.

## 8-Tx UL codebook

In the context of NR standardization, discussions are planned regarding improvements to UL DMRS, SRS, SRI, and TPMI for 8-Tx UL operation to support four or more layers per UE on UL targeting customer premises equipment (CPE)/fixed wireless access (FWA)/vehicle/industrial devices in relation to MIMO.

In the following, an 8-Tx UL codebook is proposed for use in codebook-based PUSCH transmission when the number of Tx antennas of the UE increases to 8, particularly for UE types such as FWA, CPE, vehicle, and industrial devices.

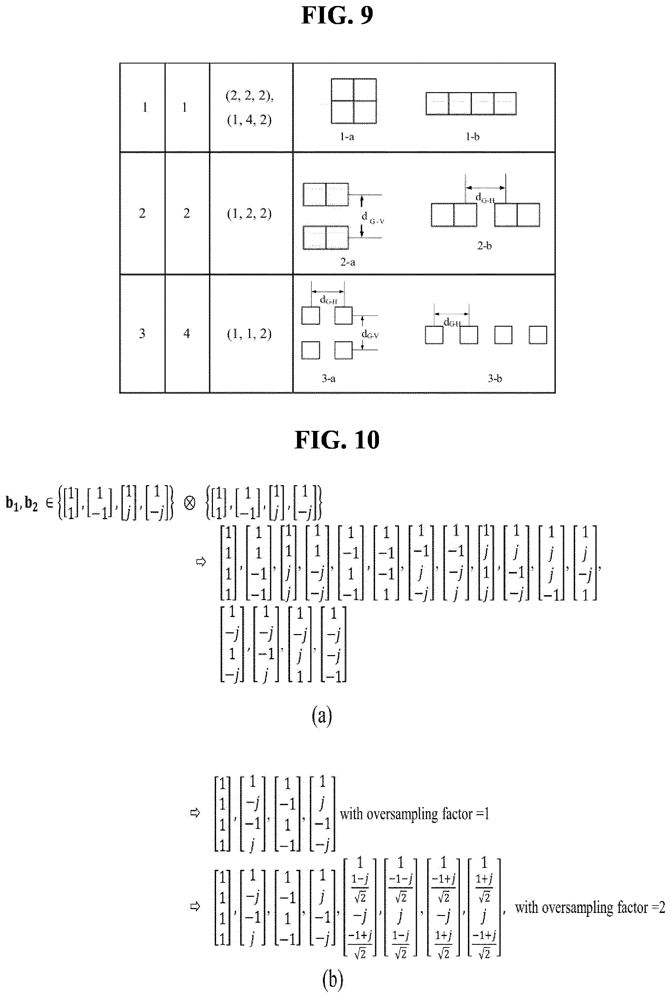

FIG. 9 illustrates various forms of 8-TX antenna of the UE.

In FIG. 9, each block represents a cross-polarization antenna. Specifically, a single block may be an antenna composed of "/" slant and "\" slant, or an antenna composed of a horizontal slant and a vertical slant.

For the antenna structure of the UE, a basis vector (e.g., DFT) is applied to antennas corresponding to the same polarization. The same basis or another basis is applied to antennas corresponding to a different polarization. Additionally, a co-phase operation is performed for the two polarizations.

This may be expressed as shown in Equation 1.

[Equation 1]

$$\mathbf{w} = \begin{bmatrix} \boldsymbol{b_1} \\ \phi \boldsymbol{b_2} \end{bmatrix}, \phi \in \{1, j, -1, -j\}$$

In Equation 1, $b_1$ and $b_2$ denote the length-4 length-4 basis vectors, and $\Phi$ denotes the co-phase. QPSK is assumed as an embodiment of the co-phase.

For a 2D antenna type, such as 1-a/3-a in FIG. 9, $b_1$ and $b_2$ may be constructed using the Kronecker product of two length-2 vectors. FIG. 10-(a) illustrates an example of this case. In FIG. 10-(a), it is assumed that the sets of $b_1$ and $b_2$ are the same.

For the antenna structures of 1-b/3-b in FIG. 9, a length-4 DFT vector is considered. By taking oversampling factors of 1 and 2 into account, the basis vector sets shown in FIG. 10-(b) is obtained.

## Proposal 1

In configuring an 8-Tx uplink codebook, the UE may have the capability related to the configuration of Tx port groups and thus report the same. To align the phases of these port groups, the BS may configure/indicate information about inter-group co-phase components.

An example of Proposal 1 may be the case of 2-a or 2-b in FIG. 9, where there are two antenna groups (each antenna group consists of four antennas). In this case, two co-phase components may be provided: inter-group co-phase and inter-polarization co-phase. They are expressed mathematically as follows. The group co-phase is distinct from the typical co-phase in the polarization domain and may be composed of different co-phase sets (e.g., different granularities and/or offsets). One example of this, as shown in Equation 2, assumes that the co-phase components are configured or indicated using the same set (QPSK).

$$[\text{Equation 2}]$$

$$\mathbf{b}_1, \mathbf{b}_2 = \begin{bmatrix} a \\ \rho a \end{bmatrix}$$

where

$$a \in \left\{ \begin{bmatrix} 1 \\ 1 \end{bmatrix}, \begin{bmatrix} 1 \\ -1 \end{bmatrix}, \begin{bmatrix} 1 \\ j \end{bmatrix}, \begin{bmatrix} 1 \\ -j \end{bmatrix} \right\}, \rho \in \{1, j, -1, -j\}$$

$$\mathbf{b}_1, \mathbf{b}_2 \in \begin{bmatrix} 1 \\ 1 \\ 1 \\ 1 \end{bmatrix}, \begin{bmatrix} 1 \\ -1 \\ 1 \\ -1 \end{bmatrix}, \begin{bmatrix} 1 \\ j \\ 1 \\ j \end{bmatrix}, \begin{bmatrix} 1 \\ -j \\ 1 \\ -j \end{bmatrix}, \begin{bmatrix} 1 \\ 1 \\ j \\ j \end{bmatrix}, \begin{bmatrix} 1 \\ -1 \\ j \\ -j \end{bmatrix}, \begin{bmatrix} 1 \\ j \\ j \\ -1 \end{bmatrix}, \begin{bmatrix} 1 \\ -j \\ j \\ 1 \end{bmatrix}, \begin{bmatrix} 1 \\ 1 \\ -1 \\ -1 \end{bmatrix}, \begin{bmatrix} 1 \\ -1 \\ -1 \\ 1 \end{bmatrix}, \begin{bmatrix} 1 \\ j \\ -1 \\ -j \end{bmatrix},$$

$$\begin{bmatrix} 1 \\ -j \\ -1 \\ j \end{bmatrix}, \begin{bmatrix} 1 \\ 1 \\ -j \\ -j \end{bmatrix}, \begin{bmatrix} 1 \\ -1 \\ -j \\ j \end{bmatrix}, \begin{bmatrix} 1 \\ j \\ -j \\ 1 \end{bmatrix}, \begin{bmatrix} 1 \\ -j \\ -j \\ -1 \end{bmatrix}$$

By substituting Equation 2 into Equation 1, Equation 3 may be obtained.

$$[\text{Equation 3}]$$

$$\mathbf{w} = \begin{bmatrix} a \\ \rho a \\ \phi a \\ \phi \rho a \end{bmatrix}$$

In this case, the same set of $\rho$ and $\Phi$ will result in the operation with {1, j, -1, -j} co-phase. If $\rho$ supports 8PSK $\{e^{j\delta i/4},$ i=0,1,....7}, the granularity of the inter-group co-phase may be increased. Conversely, if $\Phi$ supports 8PSK $\{e^{j\delta i/4},$ i=0,1,....7}, the granularity of the inter-polarization co-phase may be increased. This configuration may be established based on the capability of the UE to align phases across antennas or antenna groups well. Accordingly, the BS may improve overall uplink performance by configurably setting $\rho$ and/or $\Phi$. If a configurable codebook is not used and specification fixing is applied, a codebook subset to be used may be determined based on the capabilities of the UE (group co-phase capability and/or coherency capability and/or antenna port implantation). <u>The information about the group co-phase that the UE may report as the capability may include the (maximum) number of antenna ports, the (maximum) number of antenna port groups (or panels), or the (maximum) number of antenna ports within an antenna port group for which the UE may maintain coherency.</u> For the uplink codebook, a wideband (WB) TPMI may be assumed, while subband (SB) applications may consider Proposal 3.

**Proposal 2**

In configuring an 8-Tx uplink codebook, the UE may configure/indicate a codebook type for UL PUSCH transmission to support various UE antenna configurations.

The codebook type in Proposal 2 may be determined by the antenna structure of the UE as illustrated in FIG. A. It has a value a value that may be determined based on the capability of the UE or set by the BS. The codebook type may be determined based on the oversampling factor and/or inter-group co-phase ($\rho$) and/or inter-polarization co-phase ($\Phi$) described above in Proposal 1, and the BS may set/indicate the same.

The proposed codebook may also be applied in simultaneous multi-panel (STxMP) uplink transmission. However, in this case, when it is configured for STxMP, different inter-group co-phases ($\rho$) may be used. For example, for non-STxMP, $\rho$ may adopt QPSK. For STxMP, $\rho$ may adopt 8PSK to achieve the performance gain of STxMP. In the case of STxMP, the value of $\rho$ may be indicated in the TPMI field, or a separate field for inter-group co-phase may be introduced to specify the value of $\rho$ for the UE to use. In other words, a 2 or 3-bit field may be used to indicate the value of $\rho$, while the remaining TPMI field may be used to indicate a and/or $\Phi$.

**Proposal 3**

In configuring an 8-Tx UL codebook, when subband TPMI is applied, the following inter-group co-phase indication is proposed.

Equation 2 may be modified into Equation 4, where a and $\Phi_1$ may indicate wideband TPMI, and $\Phi_2$, $\rho_1$, and $\rho_2$ may be used to indicate subband TPMI. Alternatively, the roles may be reversed, depending on the indication/configuration.

$$[\text{Equation 4}]$$

$$\mathbf{w} = \begin{bmatrix} a \\ \phi_2 \rho_1 a \\ \phi_1 a \\ \phi_2 \rho_2 a \end{bmatrix}$$

Equation 5 shows an example of the parameters $\Phi_1$, $\Phi_2$, $\rho_1$, and $\rho_2$.

$$[\text{Equation 5}]$$

$$\phi_1 \in \{1, j, -1, -j\}$$

$$\phi_2 \in \{e^{j\pi/4}, e^{j3\pi/4}, e^{j5\pi/4}, e^{j7\pi/4}\}$$

$$\rho_1, \rho_2 \in \{e^{-j\pi/4}, e^{j\pi/4}\}$$

Here, the definition "subband" may be determined by the BS configuration, and the SB payload is determined as 2 bits (1 bit for $\rho_1$ and 1 bit for $\rho_2$) multiplied by the number of subbands. However, if the subband becomes excessively large, the required SB payload may become very large. Therefore, based on a specific rule or by the BS configuration, the maximum subband group may be defined, and the corresponding values of $\rho_1$ and $\rho_2$ may be set/indicated for each group.

Proposals 1, 2, and 3 above may be used independently or in combination.

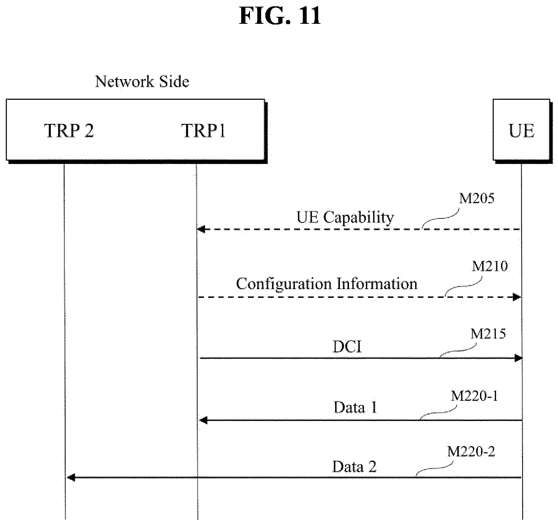

FIG. 11 illustrates the transmission and reception procedure based on a single DCI in a multiple TRP situation.

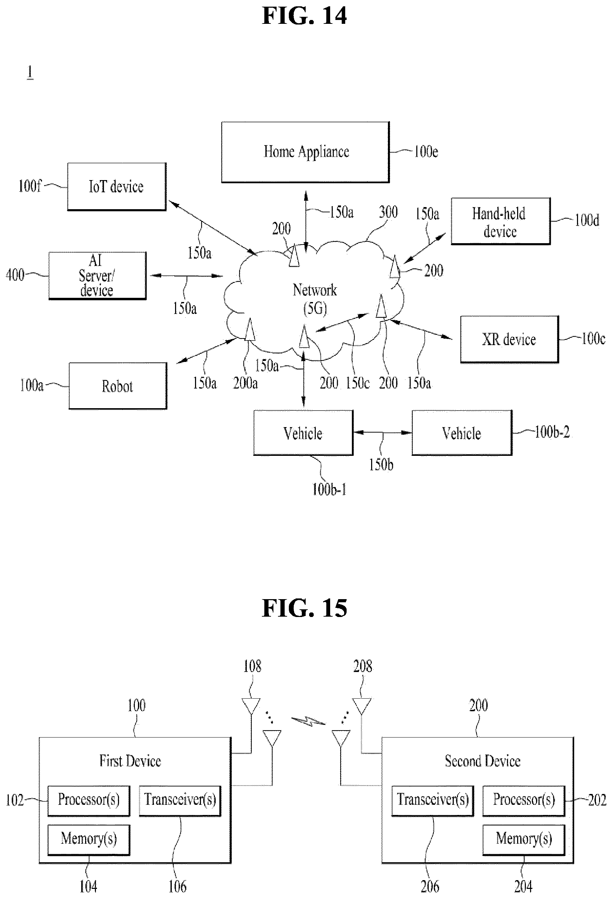

Specifically, FIG. 11 illustrates signaling between the network side (e.g., TRP 1, TRP 2) and the UE in a multiple TRP (i.e., M-TRP or multi-cell, where "TRP" can be replaced with "cell") situation where the proposed methods (e.g., Proposal 1/Proposal 2/Proposal 3, etc.) may be applied. Here, the UE/network side are merely an example and may be replaced with various devices as described in FIGS. 15 to 17. FIG. 11 is provided for illustrative purposes only and is not intended to limit the scope of the present disclosure. Additionally, some of the steps shown in FIG. 11 may be omitted depending on the situation and/or configuration. Although FIG. 11 illustrates an example of single DCI-based M-TRP transmission, the method described in FIG. 11 may be extended to multiple DCI-based M-TRP transmission. Further, the operations of the network side and the UE in FIG. 11 may be based on the uplink transmission/reception operations/Multi-TRP-related operations described above.

Referring to FIG. 11, signaling between two TRPs and the UE is considered for simplicity, but the signaling method may also be extended to signaling between multiple TRPs and multiple UEs. In the following description, the network side may be a BS including multiple TRPs, or a cell including multiple TRPs. For example, ideal/non-ideal backhaul may be configured between TRP 1 and TRP 2 that constitute the network side. Further, while the description below is based on multiple TRPs, it may be extended and applied to transmissions through multiple panels. Moreover, in this document, the operation of the UE receiving a signal from TRP1/TRP2 may be interpreted/described as (or may be the operation of) the UE receiving a signal from the network side (via/using TRP1/TRP2), and the operation of the UE transmitting a signal to TRP1/TRP2 may be interpreted/described as (or may be the operation of) the UE transmitting a signal to the network side (via/using TRP1/TRP2), and vice versa.

As used herein, the term "BS" may refer to any object performing transmission/reception of data with the UE. For example, the BS may include one or more transmission points (TPs), one or more transmission and reception points (TRPs), and the like. The TP and/or TRP may include the panels, transmission and reception units, and the like of the BS. Although the following description uses "TRP", "TRP" may be replaced by terms such as panel, antenna array, cell (e.g., macro cell, small cell, pico cell, etc.), TP (transmission point), BS (base station, gNB, etc.), and the like as mentioned above. Further, the TRPs may be classified based on information about the CORESET group (or CORESET pool) (e.g., index, ID). For example, when a UE is configured to communicate with multiple TRPs (or cells), this may mean that multiple CORESET groups (or CORESET pools) are configured for the UE. Such configurations of the CORESET group (or CORESET pools) may be established through higher-layer signaling (e.g., RRC signaling).

Specifically, FIG. 11 illustrates signaling when a UE receives a single DCI in a situation of M-TRP (or cell, wherein all TRPs may be replaced by cells/panels, or configuration of multiple CORESETs (/CORESET groups) from one TRP may also be assumed to be M-TRP) (i.e., when one TRP transmits DCI to the UE). In the figure, TRP 1 is assumed to be the representative TRP that transmits the DCI.

The UE may transmit a UE capability to the network side via/using TRP 1 (and/or TRP 2) (M205). For example, the UE capability may include information about whether the UE supports the above-described proposed methods (e.g., Proposal 1 / Proposal 2 / Proposal 3, etc.)/the capabilities of the UE related to the capabilities of the UE related to the support.

For example, the UE capability may include information such as the # of supported antenna ports / the number of ports per panel / the number of panels that may perform transmission simultaneously / coherency capability (e.g. nonCoherent, partialNonCoherent, fullCoherent) / full power transmission capability / supported full Tx mode / supported TPMI group / port switching capability / TX chain-related information / whether M-TRP transmission is supported / the number of SRS resources available for transmission / multiplexing information (e.g., TDM/FDM/SDM). If the UE capability information is predefined/agreed upon, this step may be omitted.

For example, the operation of the UE (100/200 in FIGS. 15 to 17) of transmitting the UE capability to the network side (100/200 in FIG. 15) in step M205 may be implemented by the devices in FIGS. 15 to 17 as described below. For example, referring to FIG. 15, one or more processors 102 may control one or more transceivers 106 and/or one or more memories 104 to transmit the UE capability. The one or more transceivers 106 may transmit the UE capability to the network side.

The UE may receive configuration information related to multiple TRP-based transmission and reception from the network side via TRP 1 (and/or TRP 2) (M210). For example, the configuration information may include information related to the configuration on the network side (i.e., TRP configuration) / resource allocation related to multiple TRP-based transmission and reception / system information (SI) / scheduling information / PUSCH-Config (TS 38.331 PUSCH Config). For example, the configuration information may include information related to CB subset restriction/CB subsampling (e.g., CB subset restriction/CB subsampling pattern/ bitmap, etc.). This configuration information may be delivered through higher-layer signaling (e.g., RRC signaling, MAC-CE, etc.). If the configuration information is predefined or preconfigured, this step may be omitted. For example, information required for the operations described in the proposed methods (e.g., Proposal 1 / Proposal 2 / Proposal 3) may be included in the configuration information.

For example, the operation of the UE (100/200 in FIGS. 15 to 17) receiving the configuration information related to the multiple TRP-based transmission and reception from the network side (100/200 in FIG. 15) in step M210 described above may be implemented by the devices in FIGS. 15 to 17, which will be described below. For example, referring to FIG. 15, the one or more processors 102 may control the one or more transceivers 106 and/or the one or more memories 104 to receive the configuration information related to the multiple TRP-based transmission and reception. The one or more transceivers 106 may receive the configuration information related to the multiple TRP-based transmission and reception from the network side.

The UE may receive DCI from the network side via TRP 1 (M215). The DCI may be delivered on a control channel (e.g., PDCCH). For example, the DCI may include information for scheduling UL transmission (e.g., UL scheduling information)/ precoding related information. For example, the precoding related information may include information about SRI / TPMI / TRI / MCS, etc. For example, the DCI may be DCI format 0_1 or DCI format 0_0. This DCI may schedule PUSCH for multiple cells at once. For example, PUSCH scheduling for each of the multi-cells may be performed at once through the DCI.

For example, the TRI/TPMI/SRI, etc. may be indicated/configured as described in the proposed methods (e.g., Proposal 1 / Proposal 2 / Proposal 3), considering the transmission and reception through multiple panels/ports. For example, the TRI for one of the TRPs (e.g., the first TRP (which may be determined based on an index, such as CoresetID/TCI state, etc.)) may be indicated, and it may be assumed that the same TRP value is applied for the other TRP. For example, a common/separate TRI to be applied to the TRPs may be indicated through higher-layer configuration, and TPMI may be indicated through the DCI. For example, in terms of the channel environment, the rank of the TRP with the best channel environment may be used to set the rank of the other TRPs to be below the reference rank or a predefined value may be used. For example, a TPMI may be indicated for a specific rank combination. For example, the field size of the TPMI may be determined based on the greatest one of the numbers of TPMIs for the respective ranks. For example, the rank for one of the multiple TRPs (e.g., the first TRP (which may be determined based on an index such as CoresetID/TCI state)) may be indicated, while the rank indication for the other TRP may be omitted. Instead, an SRS resource combination for the corresponding rank transmission may be indicated.

For example, as with the methods in Proposal 2, CB subset restriction/CB subsampling may be configured based on the DCI. For example, a CB subset may be configured based on an index (e.g., odd/even number) of the TPMI. For example, the subsampling may be applied only for a specific rank. The subsampling may be performed based on co-phasing between ports/port groups.

Additionally, for example, before scheduling UL transmission, the network side may perform a procedure for acquiring information about the UE and the UL channel state (i.e., UL CSI acquisition). For example, based on the CSI-related operations described above, information about the channel state between the UE and the network side may be acquired.

For example, the operation of the UE (100/200 of FIGS. 15 to 17) receiving the DCI from the network side (100/200 of FIG. 15) in step M215 described above may be implemented by the devices in FIGS. 15 to 17, which will be described below. For example, referring to FIG. 15, the one or more processors 102 may control the one or more transceivers 106 and/or the one or more memories 104 to receive the DCI. The one or more transceivers 106 may receive the DCI from the network side.

The UE may transmit Data 1 to the network side via/using TRP 1 (M220-1). Additionally, the UE may transmit Data 2 to the network side via/using TRP 2 (M220-2). The data (e.g., Data 1, Data 2) may be transmitted on a data channel (e.g., PUSCH, etc.). Further, steps M220-1 and M220-2 may be performed simultaneously, or any one of the steps may be performed earlier than the other. For example, Data1/Data2 may have been precoded and may include an RS (e.g., DMRS) for data decoding. The transmission of Data 1 and/or Data 2 may be based on the proposed methods (e.g., Proposal 1/Proposal 2/Proposal 3, etc.) described above.

For example, the operation of the UE (100/200 in FIGS. 15 to 17) transmitting Data1/Data2 to the network side (100/200 in FIG. 15) in step M220-1/M220-2 described above may be implemented by the devices in FIGS. 15 to 17, which will be described below. For example, referring to FIG. 15, the one or more processors 102 may control the one or more transceivers 106 and/or the one or more memories 104 to transmit Data1/Data2. The one or more transceivers 106 may transmit the Data1/Data2 to the network side.

As mentioned earlier, the network side/UE signaling and operations (e.g., Proposal 1/ Proposal 2/ Proposal 3/ FIG. 11, etc.) may be implemented by the devices (e.g., FIGS. 15 to 17), which will be described below. For example, the network side (e.g., TRP 1 / TRP 2) may correspond to the first wireless device, and the UE may correspond to the second wireless device. In some cases, the reverse may also be considered.

For example, the network side/UE signaling and operations (e.g., Proposal 1 / Proposal 2 / Proposal 3 / FIG. 11, etc.) described above may be processed by the one or more processors (e.g., 102, 202) in FIGS. 15 to 17. The network side/UE signaling and operations (e.g. Proposal 1/ Proposal 2/ Proposal 3/ FIG. 11, etc.) described above may be stored in may be stored in memory (e.g., the one or more memories (e.g., 104, 204) in FIG. 15) as instructions/programs (e.g., executable code) to drive the at least one processor (e.g., 102, 202) in FIGS. 15 to 17.

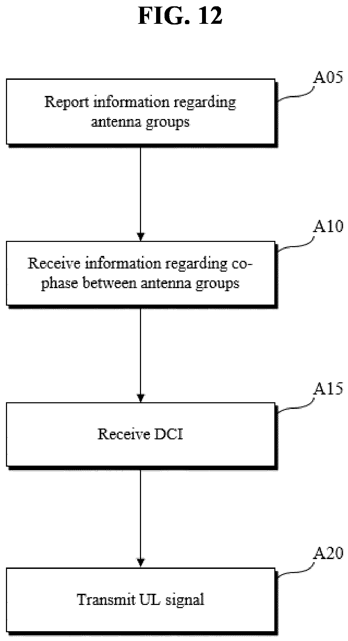

FIG. 12 illustrates an example implementation of a method of operating a UE in a wireless communication system according to one embodiment of the present disclosure.

Referring to FIG. 12, the UE may report information about antenna groups configured based on multiple antennas of the UE to the network (A05).

The UE may receive information about a co-phase between the antenna groups from the network (A10).

The UE may receive downlink control information (DCI) for uplink scheduling (A15).

Based on the DCI, the UE may transmit an uplink signal (A20).

The codebook for precoding of the uplink signal may be determined based on the information about the co-phase between the antenna groups received from the network.

The number of the multiple antennas may be 8 or more.

The information about the co-phase may be determined based on the information about the antenna groups reported by the UE.

The information about the co-phase may provide a co-phase for each subband.

A precoding matrix for the uplink signal may be determined based on the codebook determined based on the information about the co-phase, and a transmission precoding matrix indicator (TPMI) field included in the DCI.

The information about the antenna groups may relate to at least one of the number of the antenna groups, a distance between the antenna groups, the number of antennas included in each of the antenna groups, or a distance between antennas included in each of the antenna groups.

The UE may report, to the network, at least one of the number of antenna ports or the number of antenna port groups available for coherent transmission, based on the information about the co-phase between the antenna groups.

The transmission of the uplink signal may be related to multiple transmission reception points (TRPs).

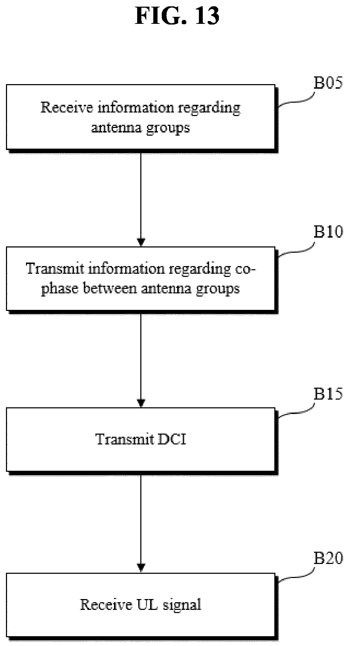

FIG. 13 illustrates an example implementation of a method of operating a BS in a wireless communication system according to one embodiment of the present disclosure.

Referring to FIG. 13, the BS may receive, from a UE, information about antenna groups configured based on multiple antennas of the UE (B05).

The BS may transmit information about a co-phase between the antenna groups to the UE (B10).

The BS may transmit downlink control information (DCI) for uplink scheduling to the UE (B15).

The BS may receive an uplink signal based on the DCI (B20).

The codebook for precoding of the uplink signal may be determined based on the information about the co-phase between the antenna groups.

FIG. 14 illustrates a communication system 1 applied to the present disclosure.

Referring to FIG. 14, a communication system 1 includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 15 illustrates wireless devices applicable to the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

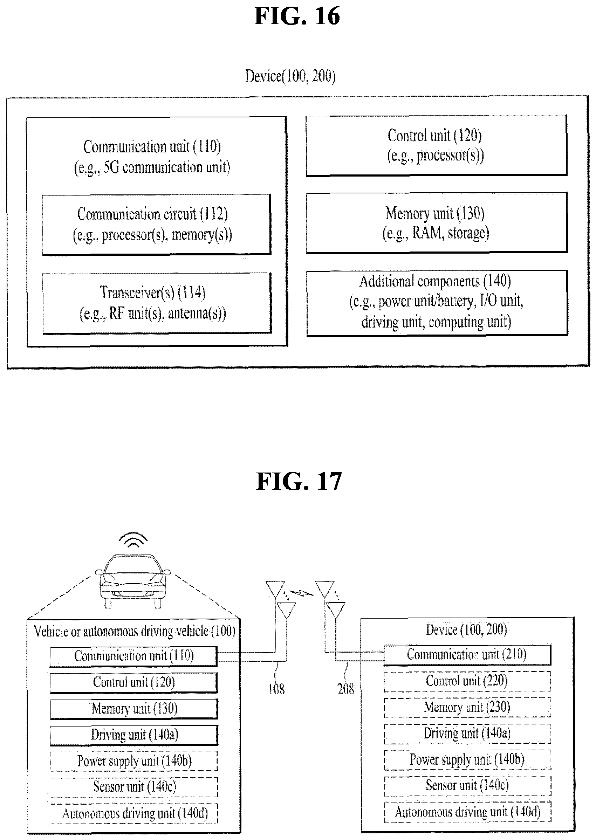

FIG. 16 illustrates another example of a wireless device applied to the present disclosure. The wireless device may be implemented in various forms according to a use-case/service (refer to FIG. 14).

Referring to FIG. 16, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140)

EP 4 572 167 A1

may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 17 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 17, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

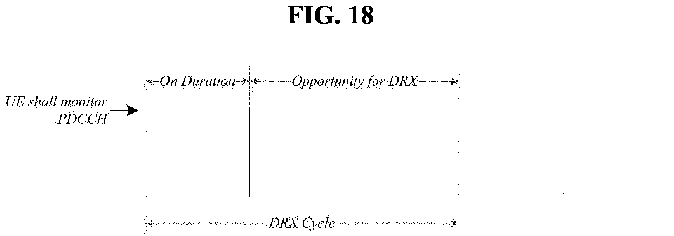

FIG. 18 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 18, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the aforedescribed/proposed procedures and/or methods. For example, when DRX is configured, PDCCH reception occasions (e.g., slots with PDCCH SSs) may be configured discontinuously according to a DRX configuration in the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the present disclosure. Irrespective of whether DRX is configured, PDCCH monitoring may be restricted during a time period configured as a measurement gap.

DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

[Industrial Applicability]

The present disclosure is applicable to UEs, BSs, or other apparatuses in a wireless mobile communication system.

**Claims**

1. A method of transmitting a signal by a user equipment (UE) in a wireless communication system, the method comprising:

   reporting, to a network, information about antenna groups which are configured based on a plurality of antennas of the UE;
   receiving information about a co-phase between the antenna groups from the network;
   receiving downlink control information (DCI) for uplink scheduling; and
   transmitting an uplink signal based on the DCI,
   wherein a codebook for precoding of the uplink signal is determined based on the information about the co-phase between the antenna groups received from the network.

2. The method of claim 1, wherein a number of the antennas is 8 or more.

3. The method of claim 1, wherein the information about the co-phase is determined based on the information about the antenna groups reported by the UE.

4. The method of claim 1, wherein the information about the co-phase provides a co-phase for each sub-band.

5. The method of claim 1, wherein a precoding matrix for the uplink signal is determined based on the codebook determined based on the information about the co-phase and a transmission precoding matrix indicator (TPMI) field included in the DCI.

6. The method of claim 1, wherein the information about the antenna groups relates to at least one of:

   a number of the antenna groups;
   a distance between the antenna groups;
   a number of antennas in each of the antenna groups; or
   a distance between antennas included in each of the antenna groups.

7. The method of claim 1, further comprising:
   reporting, to the network, at least one of a number of antenna ports or a number of antenna port groups available for coherent transmission based on the information about the co-phase between the antenna groups.

8. The method of claim 1, wherein the transmission of the uplink signal is related to multiple transmission reception points (TRPs).

9. A computer-readable recording medium storing a program for executing the method of claim 1.

10. A device for wireless communication, the device comprising:

a memory configured to store instructions; and
a processor configured to perform operations by executing the instructions,
wherein the operations of the processor comprise:

reporting, to a network, information about antenna groups which are configured based on a plurality of antennas;
receiving information about a co-phase between the antenna groups from the network;
receiving downlink control information (DCI) for uplink scheduling; and
transmitting an uplink signal based on the DCI,
wherein a codebook for precoding of the uplink signal is determined based on the information about the co-phase between the antenna groups received from the network.

11. The device of claim 10, further comprising:

a transceiver configured to transmit or receive a wireless signal under control of the processor,
wherein the device is a user equipment (UE) in a wireless communication system.

12. The device of claim 10, wherein the device is an application specific integrated circuit (ASIC) or a digital signal processing device.

13. A method of receiving a signal by a base station in a wireless communication system, the method comprising:

receiving, from a user equipment (UE), information about antenna groups configured based on a plurality of antennas of the UE;
transmitting, to the UE, information about a co-phase between the antenna groups;
transmitting downlink control information (DCI) for uplink scheduling to the UE; and
receiving an uplink signal based on the DCI,
wherein a codebook for precoding of the uplink signal is determined based on the information about the co-phase between the antenna groups.

14. A base station for wireless communication, the base station comprising:

a transceiver; and
a processor configured to perform operations via the transceiver, the operations comprising:

receiving, from a user equipment (UE), information about antenna groups configured based on a plurality of antennas of the UE;
transmitting, to the UE, information about a co-phase between the antenna groups;
transmitting downlink control information (DCI) for uplink scheduling to the UE; and
receiving an uplink signal based on the DCI,
wherein a codebook for precoding the uplink signal is determined based on the information about the co-phase between the antenna groups.

# FIG. 1

Initial Cell Search / System Information Reception / Random Access Procedure / General DL/UL Tx/Rx S108

PSS/SSS & [DLRS] & PBCH — S101

PDCCH/ PDSCH (BCCH) — S102

PRACH — S103

PDCCH/ PDSCH — S104

PRACH — S105

PDCCH/ PDSCH — S106

PDCCH/ PDSCH — S107

PUSCH/ PUCCH

• DL/UL ACK/NACK
• UE CQI/PMI/Rank Report using PUSCH and PUCCH

# FIG. 2

One Frame (10ms)

Half-Frame (5ms)    Half-Frame (5ms)

Subframe 0 (1ms)    Subframe 4 (1ms)    Subframe 5 (1ms)    Subframe 9 (1ms)

Subframe (1ms)

15KHz    Slot (14 symbols)    1ms

30KHz    Slot 0 (14 symbols)    Slot 1    500us

60KHz    Slot 0 (14 symbols)    Slot 1    Slot 2    Slot 3    250us

120KHz    Slot 0 (14 symbols)    Slot 1    Slot 2    Slot 3    Slot 4    Slot 5    Slot 6    Slot 7    125us

# FIG. 3

Resource grid

A carrier (up to 3300 subcarriers, i. e., 275 RBs)

A BWP

1 RB = 12 subcarriers

1 RE

1 subcarrier

1 symbol

# FIG. 4

One slot

# FIG. 5

DL assingment-to-PDSCH offset (K0)

PDCCH

PDSCH

PUCCH

slot

PDSCH-to-HARQ-ACK reporting offset (K1)

# FIG. 6

UL grant-to-PUSCH offset (K2)

| PDCCH | | | | | PUSCH | | |

# FIG. 7

```
      UE                                          BS

       |                                           |
       |    Configuration Information related to CSI (710)  |
       |<──────────────────────────────────────────|
       |                                           |
       |          RS(e.g., CSI-RS) (720)           |
       |<──────────────────────────────────────────|
       |                                           |
       |  ┐                                        |
       |  │  Calculate CSI (730)                   |
       |  ┘                                        |
       |                                           |
       |            Report CSI (740)               |
       |──────────────────────────────────────────>|
       |                                           |
```

**FIG. 8**

TRP 1

Layer Group #1
for CW#1

TRP 2

Layer Group #1
for CW#2

UE 1

**(a)**

TRP 1

Layer Group #1
for CW#1

TRP 2

Layer Group #2
for CW#2

UE 1

**(b)**

# FIG. 9

# FIG. 10

$$\mathbf{b_1}, \mathbf{b_2} \in \left\{ \begin{bmatrix} 1 \\ 1 \end{bmatrix}, \begin{bmatrix} 1 \\ -1 \end{bmatrix}, \begin{bmatrix} 1 \\ j \end{bmatrix}, \begin{bmatrix} 1 \\ -j \end{bmatrix} \right\} \otimes \left\{ \begin{bmatrix} 1 \\ 1 \end{bmatrix}, \begin{bmatrix} 1 \\ -1 \end{bmatrix}, \begin{bmatrix} 1 \\ j \end{bmatrix}, \begin{bmatrix} 1 \\ -j \end{bmatrix} \right\}$$

$$\Rightarrow \begin{bmatrix} 1 \\ 1 \\ 1 \\ 1 \end{bmatrix}, \begin{bmatrix} 1 \\ 1 \\ -1 \\ -1 \end{bmatrix}, \begin{bmatrix} 1 \\ 1 \\ j \\ j \end{bmatrix}, \begin{bmatrix} 1 \\ 1 \\ -j \\ -j \end{bmatrix}, \begin{bmatrix} 1 \\ -1 \\ 1 \\ -1 \end{bmatrix}, \begin{bmatrix} 1 \\ -1 \\ -1 \\ 1 \end{bmatrix}, \begin{bmatrix} 1 \\ -1 \\ j \\ -j \end{bmatrix}, \begin{bmatrix} 1 \\ -1 \\ -j \\ j \end{bmatrix}, \begin{bmatrix} 1 \\ j \\ 1 \\ j \end{bmatrix}, \begin{bmatrix} 1 \\ j \\ -1 \\ -j \end{bmatrix}, \begin{bmatrix} 1 \\ j \\ j \\ -1 \end{bmatrix}, \begin{bmatrix} 1 \\ j \\ -j \\ 1 \end{bmatrix},$$

$$\begin{bmatrix} 1 \\ -j \\ 1 \\ -j \end{bmatrix}, \begin{bmatrix} 1 \\ -j \\ -1 \\ j \end{bmatrix}, \begin{bmatrix} 1 \\ -j \\ j \\ 1 \end{bmatrix}, \begin{bmatrix} 1 \\ -j \\ -j \\ -1 \end{bmatrix}$$

(a)

$$\Rightarrow \begin{bmatrix} 1 \\ 1 \\ 1 \\ 1 \end{bmatrix}, \begin{bmatrix} 1 \\ -j \\ -1 \\ j \end{bmatrix}, \begin{bmatrix} 1 \\ -1 \\ 1 \\ -1 \end{bmatrix}, \begin{bmatrix} 1 \\ j \\ -1 \\ -j \end{bmatrix} \text{ with oversampling factor =1}$$

$$\Rightarrow \begin{bmatrix} 1 \\ 1 \\ 1 \\ 1 \end{bmatrix}, \begin{bmatrix} 1 \\ -j \\ -1 \\ j \end{bmatrix}, \begin{bmatrix} 1 \\ -1 \\ 1 \\ -1 \end{bmatrix}, \begin{bmatrix} 1 \\ j \\ -1 \\ -j \end{bmatrix}, \begin{bmatrix} 1 \\ \frac{1-j}{\sqrt{2}} \\ -j \\ \frac{-1+j}{\sqrt{2}} \end{bmatrix}, \begin{bmatrix} 1 \\ \frac{-1-j}{\sqrt{2}} \\ j \\ \frac{1-j}{\sqrt{2}} \end{bmatrix}, \begin{bmatrix} 1 \\ \frac{-1+j}{\sqrt{2}} \\ -j \\ \frac{1+j}{\sqrt{2}} \end{bmatrix}, \begin{bmatrix} 1 \\ \frac{1+j}{\sqrt{2}} \\ j \\ \frac{-1+j}{\sqrt{2}} \end{bmatrix}, \text{ with oversampling factor =2}$$

(b)

# FIG. 11

Network Side

| TRP 2 | TRP1 | | UE |

M205

UE Capability

M210

Configuration Information

DCI M215

Data 1 M220-1

Data 2 M220-2

# FIG. 12

```
┌─────────────────────────────┐
│  Report information regarding│   A05
│      antenna groups          │
└─────────────────────────────┘
               │
               ▼
┌─────────────────────────────┐
│  Receive information regarding co-│  A10
│  phase between antenna groups│
└─────────────────────────────┘
               │
               ▼
┌─────────────────────────────┐
│        Receive DCI           │   A15
└─────────────────────────────┘
               │
               ▼
┌─────────────────────────────┐
│      Transmit UL signal      │   A20
└─────────────────────────────┘
```

# FIG. 13

Receive information regarding antenna groups — B05

Transmit information regarding co-phase between antenna groups — B10

Transmit DCI — B15

Receive UL signal — B20

# FIG. 14

<u>1</u>

Home Appliance — 100e

100f — IoT device

Hand-held device — 100d

150a    300    150a

200

150a

400 — AI Server/ device

150a

Network (5G)

XR device — 100c

100a — Robot

150a   200a    150a     200   150c   200   150a

Vehicle

Vehicle — 100b-2

150b

100b-1

# FIG. 15

108         208

100            200

First Device

102 — Processor(s)   Transceiver(s)

Memory(s)

104       106

Second Device

Transceiver(s)   Processor(s) — 202

Memory(s)

206       204

37

# FIG. 16

Device(100, 200)

| | |
|---|---|
| Communication unit (110)<br>(e.g., 5G communication unit) | Control unit (120)<br>(e.g., processor(s)) |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 17

Vehicle or autonomous driving vehicle (100)

| |
|---|
| Communication unit (110) |
| Control unit (120) |
| Memory unit (130) |
| Driving unit (140a) |
| Power supply unit (140b) |
| Sensor unit (140c) |
| Autonomous driving unit (140d) |

108    208

Device (100, 200)

| |
|---|
| Communication unit (210) |
| Control unit (220) |
| Memory unit (230) |
| Driving unit (140a) |
| Power supply unit (140b) |
| Sensor unit (140c) |
| Autonomous driving unit (140d) |

# FIG. 18

**EP 4 572 167 A1**

## INTERNATIONAL SEARCH REPORT

| International application No. |
|---|
| **PCT/KR2023/010256** |

**A. CLASSIFICATION OF SUBJECT MATTER**

**H04B 7/0456**(2017.01)i; **H04B 7/0404**(2017.01)i; **H04B 7/06**(2006.01)i

According to International Patent Classification (IPC) or to both national classification and IPC

**B. FIELDS SEARCHED**

Minimum documentation searched (classification system followed by classification symbols)

H04B 7/0456(2017.01); H04B 7/06(2006.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 안테나 그룹(antenna group), 공통-위상(co-phase), 상향링크(uplink), 코드북 (codebook), 프리코딩(precoding)

**C. DOCUMENTS CONSIDERED TO BE RELEVANT**

| Category* | Citation of document, with indication, where appropriate, of the relevant passages | Relevant to claim No. |
|---|---|---|
| Y | US 2022-0166475 A1 (LG ELECTRONICS INC.) 26 May 2022 (2022-05-26)<br>See paragraphs [0263]-[0267], [0309]-[0310], [0313], [0537], [0568]-[0569] and [0588]; and figure 15. | 1-14 |
| Y | HUAWEI et al. Discussion on SRI/TPMI enhancement for enabling 8 TX UL transmission. R1-2203155, 3GPP TSG RAN WG1 #109-e, e-Meeting. 29 April 2022.<br>See section 4.1. | 1-14 |
| A | OPPO. SRI TPMI enhancement for 8 TX UL transmission. R1-2203959, 3GPP TSG RAN WG1 #109-e, e-Meeting. 29 April 2022.<br>See sections 2.1-2.3. | 1-14 |
| A | MEDIATEK INC. Uplink Precoding using 8 TX Ports. R1-2204692, 3GPP TSG RAN WG1 #109-e, e-Meeting. 29 April 2022.<br>See sections 2-4. | 1-14 |
| A | US 2021-0068142 A1 (LG ELECTRONICS INC.) 04 March 2021 (2021-03-04)<br>See paragraphs [0255]-[0282]; and figures 11-12. | 1-14 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **26 October 2023** | **26 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

40

**INTERNATIONAL SEARCH REPORT**
Information on patent family members

International application No.

**PCT/KR2023/010256**

| Patent document cited in search report | | | Publication date (day/month/year) | Patent family member(s) | | | Publication date (day/month/year) |
|---|---|---|---|---|---|---|---|
| US | 2022-0166475 | A1 | 26 May 2022 | AU | 2018-244982 | A1 | 08 August 2019 |
| | | | | AU | 2018-244982 | A8 | 03 October 2019 |
| | | | | AU | 2018-244982 | B2 | 22 April 2021 |
| | | | | BR | 112019020385 | A2 | 22 April 2020 |
| | | | | BR | 112019020385 | B1 | 24 January 2023 |
| | | | | CA | 3052397 | A1 | 04 October 2018 |
| | | | | CA | 3052397 | C | 11 January 2022 |
| | | | | CL | 2019002530 | A1 | 31 January 2020 |
| | | | | CN | 110463066 | A | 15 November 2019 |
| | | | | CN | 110463066 | B | 28 June 2022 |
| | | | | EP | 3562052 | A1 | 30 October 2019 |
| | | | | EP | 3562052 | A4 | 01 July 2020 |
| | | | | JP | 2020-509677 | A | 26 March 2020 |
| | | | | JP | 7023970 | B2 | 22 February 2022 |
| | | | | KR | 10-1999355 | B1 | 11 July 2019 |
| | | | | KR | 10-2018-0135874 | A | 21 December 2018 |
| | | | | KR | 10-2019-0084352 | A | 16 July 2019 |
| | | | | KR | 10-2158159 | B1 | 21 September 2020 |
| | | | | MX | 2019010023 | A | 07 February 2020 |
| | | | | PH | 12019502054 | A1 | 29 June 2020 |
| | | | | RU | 2720462 | C1 | 30 April 2020 |
| | | | | SG | 11201906429 | A | 27 August 2019 |
| | | | | US | 10958321 | B2 | 23 March 2021 |
| | | | | US | 11265050 | B2 | 01 March 2022 |
| | | | | US | 11515909 | B2 | 29 November 2022 |
| | | | | US | 2020-0083939 | A1 | 12 March 2020 |
| | | | | US | 2020-0287602 | A1 | 10 September 2020 |
| | | | | WO | 2018-182381 | A1 | 04 October 2018 |
| | | | | WO | 2018-182381 | A8 | 12 September 2019 |
| US | 2021-0068142 | A1 | 04 March 2021 | WO | 2019-216733 | A1 | 14 November 2019 |

Form PCT/ISA/210 (patent family annex) (July 2022)